(19) **Europäisches Patentamt**
**European Patent Office**
**Office européen des brevets**

(11) **EP 1 736 733 B1**

(12) **EUROPÄISCHE PATENTSCHRIFT**

(45) Veröffentlichungstag und Bekanntmachung des Hinweises auf die Patenterteilung:
**11.08.2010 Patentblatt 2010/32**

(51) Int Cl.:
**G01C 21/00** *(2006.01)*

(21) Anmeldenummer: **06011459.2**

(22) Anmeldetag: **02.06.2006**

(54) **Verfahren zur Bestimmung einer Navigationslösung eines Navigationssystems mit einem Terrain-Navigationsmodul sowie ein Navigations-System**

Method for determining a navigation solution of a navigation system having a terrain-navigation module and a navigation system

Procédé destiné à la détermination d'une solution de navigation d'un système de navigation pourvu d'un module de navigation de terrain tout comme un système de navigation

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **22.06.2005 DE 102005029217**

(43) Veröffentlichungstag der Anmeldung:
**27.12.2006 Patentblatt 2006/52**

(73) Patentinhaber: **EADS Deutschland GmbH**
**85521 Ottobrunn (DE)**

(72) Erfinder:
- **Kreutz, Peter**
  **28857 Skye (DE)**
- **Metzger, Jürgen**
  **88662 Überlingen (DE)**
- **Taddiken, Bernd**
  **27753 Delmenhorst (DE)**

(56) Entgegenhaltungen:
- **METZGER J ET AL: "Covariance estimation for terrain referenced navigation with a comparison technique" 2004, PROC. ANNU. MEET. INST. NAVIG.; PROCEEDINGS OF THE ANNUAL MEETING - INSTITUTE OF NAVIGATION; 60TH ANNUAL MEETING OF THE INSTITUTE OF NAVIGATION 2004, PAGE(S) 571 - 580 , XP009072589 * Seite 575, linke Spalte, Absatz 2 - Seite 577, linke Spalte, Absatz 1; Abbildungen 4,5; Tabelle 1 ***
- **METZGER J ET AL: "IMPROVEMENT OF MODULAR TERRAIN NAVIGATION SYSTEMS BY MEASUREMENT DECORRELATION" 23. Juni 2003 (2003-06-23), ION ANNUAL MEETING, XX, XX, PAGE(S) 353-362 , XP009069433 * Seite 358, rechte Spalte, Absatz 3 - Seite 361, linke Spalte, Absatz 1; Abbildungen 7,8 ***
- **LAWRENCE P J JR ET AL: "Navigation sensor, filter, and failure mode simulation results using the distributed Kalman filter simulator (DKFSIM)" 22. April 1996 (1996-04-22), POSITION LOCATION AND NAVIGATION SYMPOSIUM, 1996., IEEE 1996 ATLANTA, GA, USA 22-26 APRIL 1996, NEW YORK, NY, USA,IEEE, US, PAGE(S) 697-710 , XP010163343 ISBN: 0-7803-3085-4 * Zusammenfassung; Abbildung 1 ***

## EP 1 736 733 B1

**Beschreibung**

Die Erfindung betrifft ein Verfahren zur Bestimmung einer Navigationslösung eines Navigationssystems mit einem Terrain-Navigationsmodul sowie ein Navigations-System.

In D.H. Titterton and J.L. Weston: Strapdown inertial navigation technology, Peter Peregrinus Ltd. 1997 ist dargestellt wie mit Hilfe eines Strap Down Algorithmus, welcher Beschleunigungen und Drehraten integriert, ein Inertialnavigationssystem aufgebaut werden kann. Dieses Inertialnavigationssystem stellt die Basis für ein Navigationssystem, das Position, Geschwindigkeit und Lage eines Fahrzeuges bestimmt, dar. Da die Integration der fehlerbehafteten Inertialsensordaten keine langzeitstabile Navigationslösung erlaubt, werden weitere Sensoren wie zum Beispiel das Global Positioning System (GPS), welches eine absolute Positionsbestimmung erlaubt, mit der Lösung des Inertialnavigationssystem fusioniert. In Mohinder S. Grewal and Lawrence R. Weill and Angus P. Andrews: Global Positioning Systems, Inertial Navigation, and Integration, John Wiley & Sons, Inc., 2001 wird beschrieben wie mit einem stochastischen Filter insbesondere einem Kalmanfilter die Lösung der Inertialnavigation mit anderen Sensordaten insbesondere G PS fusioniert wird. Durch die Abhängigkeit des GPS von externen Satellitensignalen ist es leicht möglich, das ein solches System absichtlich oder unabsichtlich gestört werden kann. Aus diesem Grund werden auch andere Sensorsignale zur Fusion mit der Inertialnavigationslösung herangezogen. Ein solches Sensorsignal wird durch ein Terrainnavigations-Modul basierend auf Abstandsmessungen zum Boden (Radar, Laser, Sonar...), im Folgenden Höhen-Messung genannt, erzeugt. Dies erfolgt durch den Vergleich der aus den Höhen-Messungen gewonnenen Terrainhöhe-Messungen mit einer Referenzkarte, die die tatsächlichen Terrainhöhen enthält. Es gibt mehrere Ansätze wie ein solches Terrainnavigationssystem aufgebaut sein kann. In F. Gustafsson, F. Gunnarsson, N. Bergman, U. Forssell, J. Jansson, R. Karlsson, P. Nordlund: Particle Filters for Positioning, Navigation, and Tracking, In: IEEE Transactions on Signal Processing, 50 , 425-435, 2002 wird eine Gruppe basiert auf nichtlinearen stochastischen Filtern, insbesondere Partikel Filtern, beschrieben. Diese Gruppe besitzt aber einige Nachteile in Bezug auf ihre Modularität (Möglichkeit der getrennten Entwicklung von Navigationssystem und Terrainnavigations-Modul) und auf die Akquisitionsperformance (Möglichkeit große Anfangspositionsfehler zu korrigieren). Die zweite Gruppe basiert auf Vergleichsverfahren, die einen direkten Vergleich von Terrainhöhen-Messwerten und der Referenzkarte durchführen, und wird in J. P. Goldon: Terrain contour matching (TERCOM): a cruise missile guidance aid, In: Proceedings of the SPIE Image Processing for Missile Guidance, volume 238, 1980 beschrieben. Diese Vergleichsverfahren sind modular und haben eine hervorragende Akquisitions- und Trackingperformance. Der Nachteil besteht darin, dass dieses Terrainnavigations-Modul keine Güteinformation der eigenen Positionsstützung liefert. Bisherige Verfahren wie in J. Metzger, O. Meister, G. F. Trommer, F. Tumbrägel, B. Taddiken: Covariance Estimation for Terrain Referenced Navigation with a Comparison Technique, In: Proceedings of the ION 60th Annual Meeting, June 7-9, Dayton, Ohio, USA, 2004 beschrieben, verwenden daher heuristische Verfahren, um die für die Fusionierung benötige Güte zu bestimmen. Insbesondere wird in einem solchen heuristischen Verfahren die Rauigkeit des Terrains ausgewertet und daraus die erwartete Güte der Positionsstützung geschätzt. Da aber neben der Rauigkeit auch andere Faktoren, wie die Güte der IMU, die Qualität der Referenzkarte und der Vergleichsalgorithmus selbst, einen Einfluss auf die Güte der Positionsstützungen haben, ist die bestimmte Güte nur eine suboptimale Lösung. Ein zweites Verfahren wie in J. Metzger, G. F. Trommer: Improvement of Modular Terrain Navigation Systems by Measurement Decorrelation, In: Proceedings of the ION 59th Annual Meeting, June 23-25, Albuquerque, New Mexico, USA, 2003 beschrieben, schätzt die Varianz der Positionsstützungen aus mehreren vergangenen Positionsstützungen. Dies setzt aber einen stationären ergodischen Rauschprozess für die Fehler der Positionsfixe voraus, was in den meisten Fällen nicht zutrifft. Auch diese Beschreibung der Güte ist somit nur suboptimal. An diesem Punkt setzt der Kern der Erfindung ein, der eine deutlich genauere Angabe der Güte der Positionsstützungen erlaubt.

Aufgabe der Erfindung ist, ein Verfahren und ein N avigations-System zur Bestimmung einer Navigationslösung eines Navigationssystems mit einem Terrain-Navigationsmodul bereitzustellen, mit dem die Bestimmung der Navigationslösung, insbesondere die Position, Geschwindigkeit und Lage mit verbesserter Güte ermöglicht wird.

Diese Aufgabe wird mit den Merkmalen der unabhängigen Patentansprüche gelöst. Weitere Ausführungsformen sind in den auf diesen rückbezogenen Unteransprüchen angegeben.

Erfindungsgemäß ist ein Verfahren zur Bestimmung einer Navigationslösung eines Navigationssystems mit einem Terrain-Navigationsmodul mit folgenden Schritten vorgesehen:

- Bestimmung einer Navigationslösung, einer gestützten Positionslösung und des relativen zwischen zwei Höhen-Messungen zurückgelegten Weges mit Hilfe von Navigationssensoren, einem Strap-Down-Modul und einem Navigationsfilter,

- Ermittlung einer Güte der jeweils aktuellen gestützten Position aus der jeweils aktuellen gestützten Position mittels einer ersten Güte-Funktion,

- Bildung eines Suchgebiets aufgrund vorbestimmter Kriterien und aufgrund jeweils einer vorbestimmten gestützten

2

Positionslösung und Bildung vorbestimmter Positionen innerhalb des Suchgebiets,

- Speicherung einer aktuellen Terrainhöhen-Messung und des relativen zurückgelegten Weges zwischen der aktuellen Terrainhöhen-Messung und der zuletzt gespeicherten Terrainhöhen-Messung, um diese zur Ermittlung der Güte jeweils eines relativ zurückgelegten Weges und der Güte jeweils einer gespeicherten Terrainhöhen-Messung zu verwenden,

- Bestimmung einer Vergleichsposition für jeweils eine Position innerhalb des Suchgebiets und jeweils eines gespeicherten relativ zurückgelegten Weges,

- Ermittlung einer über die Referenzkarte transformierten Güte jeweils eines gespeicherten relativ zurückgelegten Weges mittels einer zweiten Güte-Funktion unter Verwendung jeweils eines gespeicherten relativ zurückgelegten Weges,

- Ermittlung einer Güte jeweils einer gespeicherten Terrainhöhen-Messung mittels einer dritten Güte-Funktion unter Verwendung der entsprechenden gespeicherten Terrainhöhen-Messung,

- Ermittlung einer Güte jeweils einer Referenzhöhe für jeweils eine Vergleichsposition aus vorbestimmten Parametern und der entsprechenden Referenzhöhe mittels einer vierten Güte-Funktion,

- Bestimmung von Verteilungsfunktionen der Fehlermaße für jeweils eine Vergleichsposition aus einer Funktion der Güte der jeweils aktuellen gestützten Position, der über die Referenzkarte transformierten Güte jeweils eines relativ zurückgelegten Weges, der Güte jeweils einer gespeicherten Terrainhöhen-Messung und der Güte jeweils einer Referenzhöhe,

- Ermittlung einer Verteilungsfunktion des Gesamtfehlers für jeweils eine vorbestimmte Position innerhalb des Suchgebiets als Funktion der ermittelten Verteilungsfunktionen der Fehlermaße,

- Ermittlung der Minimums-Wahrscheinlichkeiten aller verwendeten Positionen im Suchgebiet mittels einer Funktion der Verteilungsfunktionen aller Gesamtfehler als Wahrscheinlichkeit, mit der jeweils eine Position des Suchgebiets den minimalen Gesamtfehler aufweist,

- Bestimmung der Güte der Positions-Stützung über eine Funktion aller Minimums-Wahrscheinlichkeiten,

- Stützung der in dem Strap-Down-Modul ermittelten Navigations-Lösung über den Navigationsfilter mit Hilfe der bestimmten Positionsstützung und der bestimmten Güte der Positionsstützung.

Die Ermittlung der Güte der jeweils aktuellen gestützten Position aus der jeweils aktuellen gestützten Position kann mittels einer ersten Güte-Funktion mit Hilfe einer ersten Verteilungsfunktion erfolgen.

Die erste Güte-Funktion kann eine Gaußverteilungs-Funktion mit einer ersten Varianz sein.

Bei der Bildung des Suchgebiets kann eine um ein gestützte Positionslösung zentriertes Suchgebiet verwendet werden.

Bei der Bildung des Suchgebiets kann eine aufgrund der Ungenauigkeit jeweils einer gestützten Positionslösung variierende Suchgebietsgröße verwendet werden. Alternativ können bei der Bildung des Suchgebiets Positionen verwendet werden, die äquidistant auf einem vordefinierten Raster angeordnet sind.

Bei der Speicherung kann die aktuellen Terrainhöhen-Messung aus der aktuellen Höhen-Messung und der aktuellen gestützten Position ermittelt werden.

Bei der Speicherung einer aktuellen Terrainhöhen-Messung und des relativen zurückgelegten Weges kann eine vorgegebene Anzahl von Terrainhöhen-Messungen und relativen zurückgelegten Wegen gespeichert werden.

Bei der Ermittlung der über die Referenzkarte transformierten Güte des gespeicherten relativ zurückgelegten Weges kann eine zweite Verteilungsfunktion verwendet werden. Bei der Ermittlung der über die Referenzkarte transformierten Güte kann insbesondere eine Gaußverteilungs-Funktion mit einer zweiten Varianz verwendet werden.

Bei der Ermittlung der Güte jeweils einer gespeicherten Terrainhöhen-Messung kann eine dritte Verteilungsfunktion verwendet werden. Bei dieser Ermittlung der Güte kann insbesondere eine Gaußverteilungs-Funktion mit einer dritten Varianz verwendet werden.

Bei der Ermittlung der Güte einer Referenzhöhe kann eine vierte Verteilungsfunktion verwendet werden. Bei dieser Ermittlung der Güte kann eine Gaußverteilungs-Funktion mit einer vierten Varianz verwendet wird.

Bei der Ermittlung der Verteilungsfunktionen des Gesamtfehlers kann für jeweils eine vorbestimmte Position innerhalb des Suchgebiets über die Faltung der einzelnen Verteilungsfunktionen der Fehlermaße durchgeführt werden.

Die Bestimmung der Güte der Positions-Stützung kann über eine Funktion aller Minimums-Wahrscheinlichkeiten mittels einer diskreten Verteilungsfunktion erfolgen, die definiert ist durch die Minimums-Wahrscheinlichkeiten. Alternativ kann die Bestimmung der Güte der Positions-Stützung über eine Kovarianzmatrix erfolgen, die berechnet wird aus den Minimums-Wahrscheinlichkeiten und der tatsächlichen Positions-Stützung.

Die Stützung der in dem Strap-Down-Modul ermittelten Navigations-Lösung kann durch folgende Schritte erfolgen:

- Bestimmung der Positionsstützung über die Berechnung des Fehlermaßes für die jeweilige Vergleichsposition

- Bestimmung des Gesamtfehlers für die jeweilige Position im Suchgebiet und

- Durchführung einer Suche nach dem minimalen Gesamtfehler über alle Gesamtfehler im Suchgebiet zur Identifikation der Positionsstützung.

Weiterhin ist erfindungsgemäß ein Navigations-System mit einem Strap-Down-Modul und einem Navigations-Filter und mit einem Terrain-Navigationsmodul zur Bestimmung einer Navigationslösung vorgesehen, wobei dem Terrain-Navigationsmodul eine gestützten Positionslösung und relative zwischen zwei Höhen-Messungen zurückgelegte Wege zugeführt werden, wobei das Terrain-Navigationsmodul folgende Funktionen umfasst:

- eine Funktion zur Ermittlung (M) einer Güte (14) der jeweils aktuellen gestützten Position (1a) aus der jeweils aktuellen gestützten Position (1a),

- eine Funktion zur Bildung (H) eines Suchgebiets und zur Bildung vorbestimmter Positionen (7) innerhalb des Suchgebiets,

- eine Funktion zur Speicherung (J) einer aktuellen Terrainhöhen-Messung und des relativen zurückgelegten Weges zwischen der aktuellen Terrainhöhen-Messung und der zuletzt gespeicherten Terrainhöhen-Messung (1b), um diese zur Ermittlung der Güte (15) jeweils eines relativ zurückgelegten Weges und der Güte (16) jeweils einer gespeicherten Terrainhöhen-Messung zu verwenden,

- eine Funktion zur Bestimmung (K) einer Vergleichsposition (8) für jeweils eine Position (7) innerhalb des Suchgebiets und jeweils eines gespeicherten relativ zurückgelegten Weges (10),

- eine Funktion zur Ermittlung (P) einer über die Referenzkarte (6) transformierten Güte jeweils eines gespeicherten relativ zurückgelegten Weges (10) mittels einer zweiten Güte-Funktion unter Verwendung jeweils eines gespeicherten relativ zurückgelegten Weges (10),

- eine Funktion zur Ermittlung (Q) einer Güte (16) jeweils einer gespeicherten Terrainhöhen-Messung (11) mittels einer dritten Güte-Funktion unter Verwendung der entsprechenden gespeicherten Terrainhöhen-Messung (11),

- eine Funktion zur Ermittlung (R) einer Güte (17) jeweils einer Referenzhöhe (6) für jeweils eine Vergleichsposition (8) aus vorbestimmten Parametern und der entsprechenden Referenzhöhe (6) mittels einer vierten Güte-Funktion,

- eine Funktion zur Bestimmung (S) von Verteilungsfunktionen (18) der Fehlermaße für jeweils eine Vergleichsposition (8) aus einer Funktion der Güte der jeweils aktuellen gestützten Position (14), der über die Referenzkarte transformierten Güte jeweils eines relativ zurückgelegten Weges (15), der Güte jeweils einer gespeicherten Terrainhöhen-Messung (16) und der Güte jeweils einer Referenzhöhe (17),

- eine Funktion zur Ermittlung (T) einer Verteilungsfunktion (19) des Gesamtfehlers für jeweils eine vorbestimmte Position innerhalb des Suchgebiets (7) als Funktion der ermittelten Verteilungsfunktionen (18) der Fehlermaße,

- eine Funktion zur Ermittlung (U) der Minimums-Wahrscheinlichkeiten (20) aller verwendeten Positionen (7) im Suchgebiet mittels einer Funktion der Verteilungsfunktionen (19) aller Gesamtfehler als Wahrscheinlichkeit, mit der jeweils eine Position des Suchgebiets den minimalen Gesamtfehler aufweist,

- eine Funktion zur Bestimmung (V) der Güte der Positions-Stützung (4b) über eine Funktion aller Minimums-Wahrscheinlichkeiten (20),

- eine Funktion zur Stützung der in dem Strap-Down-Modul (C) ermittelten Navigations-Lösung über den Navigationsfilter (D) mit Hilfe der bestimmten Positionsstützung (4a) und der bestimmten Güte der Positionsstützung (4b).

Der wesentliche Vorteil der Erfindung gegenüber bisherigen Verfahren beruht in der Verbesserung der Akquisitions- und Tracking-Eigenschaften, der Erhöhung der Integrität des Navigationssystems und der Erhöhung der Modularität von Navigationssystem und Terrainnavigations-Modul.

Im folgenden wird die Erfindung an Hand der beilegenden Figuren beschrieben, die zeigen:

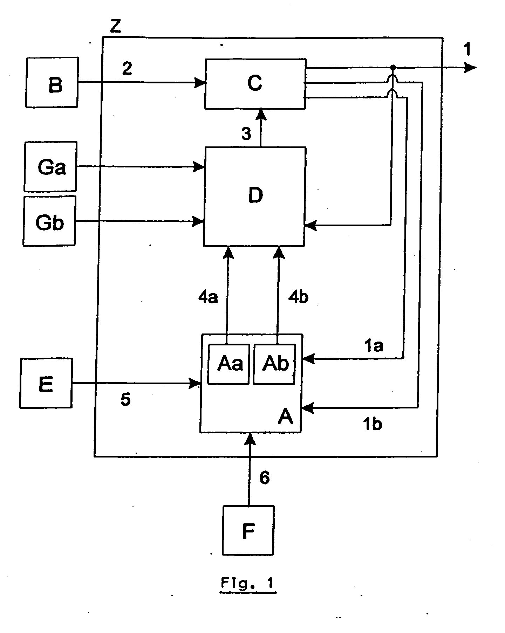

- Figur 1 eine funktionale Darstellung der Funktionen des Navigationssystems mit einem Terrain-Navigationsmodul,

- Figur 2 ein Ablauf-Diagramm der wesentlichen Funktionen des erfindungsgemäßen Navigationssystems mit dem Terrain-Navigationsmodul.

Das erfindungsgemäße Navigationssystem Z umfasst ein Terrain-Navigationsmodul A, mit dem die Bestimmung der Navigationslösung 1 eines Fluggeräts oder eines Wasser-Fahrzeugs und insbesondere eines U-Bootes durchgeführt werden kann. Dieses Fahrzeug wird im folgenden kurz Fahrzeug genannt. Die Navigationslösung umfasst zwingend die eigene Position des Fahrzeugs. Weiterhin kann die Navigationslösung die Geschwindigkeit und Lage enthalten, diese sind aber nicht zwingend erforderlich.

Dazu wird dem Navigationssystem Z Mess-Signale oder Mess-Werte für die Beschleunigungen und Drehraten 2 zugeführt, die von einem Inertialsensor-System oder einer Inertial Measurement Unit B ermittelt werden. Diese Eingangs-Signale bzw. -Daten werden zu einer Navigationslösung 1 des Fahrzeugs, einer gestützten Positionslösung 1a und des relativen zwischen zwei Höhen-Messungen zurückgelegten Weges 1b mit Hilfe von Navigationssensoren A, B, Ga, Gb, einem Strap Down Modul C und einem Navigationsfilter D verarbeitet. Dabei wird im Terrainnavigations-Modul die aus allen Sensorsignalen fusionierte und gestützte Positionslösung 1a als Positionshypothese für die Berechnung der Positionsstützung 4a und der Güte der Positionsstützung 4b herangezogen. Des Weiteren wird der jeweilige relative zurückgelegte Weg 1 b des Fahrzeugs zwischen zwei Höhen-Messungen, der aus den Beschleunigungen und Drehraten 2 durch das Strap Down Modul C bestimmt wird, im Terrainnavigations-Modul verarbeitet.

Für eine langzeitstabile Bestimmung der Navigationslösung 1 ist die Verarbeitung zusätzlicher Sensorsignale zwingend erforderlich. Die Fusion der Daten unterschiedlicher Sensoren wird durch den Navigationsfilter D erreicht, der basierend auf den Sensorsignalen Korrekturen 3 für die Navigationslösung 1, die im Strap Down Modul C berechnet wird, liefert. Typischerweise wird für den Navigationsfilter D ein Kalmanfilter verwendet, wobei ohne Einschränkungen auch andere nichtlineare stochastische Filter verwendet werden können.

Das Terrainnavigations-Modul A liefert als zusätzliches Sensorsignal 4a für den Navigationsfilter D die dreidimensionale Position des Fahrzeugs, das für die langzeitstabile Navigation als Positionsstützung benötigt wird. Zusätzlich liefert das Terrainnavigations-Modul eine Information über die Güte der Positions-Stützung 4b.

Als Eingangsgrößen wird für das Terrainnavigations-Modul A die gestützte Position 1a also die Positionsdaten der Navigationslösung als Hypothese für die tatsächliche Position verwendet. Weiterhin wird dem Terrainnavigations-Modul A relative zurückgelegte Wege 1 b zugeführt, um den vom Fahrzeug zurückgelegten Weg zwischen zwei Höhen-Messungen bestimmen zu können. Die Sensorquelle für die Terrainnavigation stellt ein Abstandsmesser E (zum Beispiel einem Radar- oder Laserhöhenmesser für ein Fluggerät oder ein Sonar für ein Wasserfahrzeug), der die Entfernung 5 des Fahrzeugs zum Boden bestimmt, im weiteren als die Höhen-Messung bezeichnet, dar.

Weitere Sensoren wie zum Beispiel GPS Ga oder barometrische Höhenmesser Gb können ebenfalls im Navigationsfilter verarbeitet werden, sind aber nicht zwingend erforderlich.

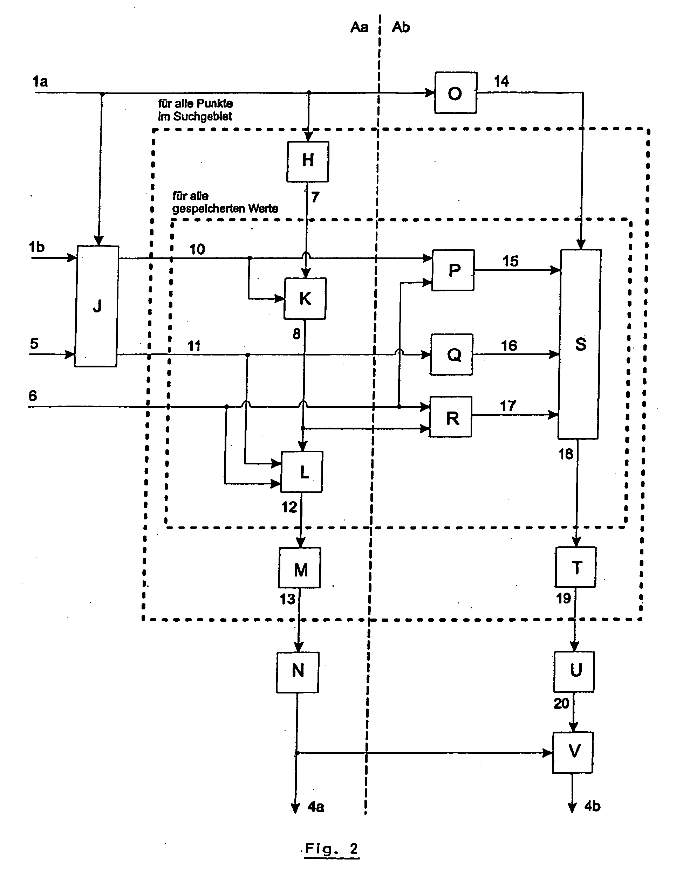

Das Terrainnavigations-Modul ist in Abbildung 2 aufgeschlüsselt. Das Modul teilt sich in einen Bereich zur Bestimmung der Positions-Stützung Aa und einen Bereich zur Bestimmung der Güte der Positions-Stützung Ab auf.

Beiden Bereichen ist die Speicherung J einer aktuellen Terrainhöhen-Messung und des relativen zurückgelegten Weges zwischen der aktuellen Terrainhöhen-Messung und der zuletzt gespeicherten Terrainhöhen-Messung 1 b gemeinsam. Bei der Speicherung J werden die aktuellen Terrainhöhen-Messung aus der aktuellen Höhen-Messung 5 und der aktuellen gestützten Position 1a ermittelt. Diese gespeicherten Werte werden im folgenden für die Ermittlung der Güte 15 jeweils eines relativ zurückgelegten Weges und der Güte 16 jeweils einer gespeicherten Terrainhöhen-Messung verwendet. Außerdem werden die gespeicherten Werte für die Bestimmung der Positionsstützung 4a über die Berechnung L des Fehlermaßes 12 für die jeweilige Vergleichsposition 8 und die Bestimmung M des Gesamtfehlers 13 für die jeweilige Position im Suchgebiet 7 und die Suche nach dem minimalen Gesamtfehler N über alle Gesamtfehler im Suchgebiet zur Identifikation der Positionsstützung 4a verwendet. Die Identifikation der Positionsstützung 4a kann erfolgen, da die Position im Suchgebiet 7, die den minimalen Gesamtfehler 13 aufweist, mit der größten Wahrscheinlichkeit der tatsächlichen Position entspricht. Dies ist dadurch begründet, dass der minimale Gesamtfehler 13 auch auf die größte Ähnlichkeit, zwischen den aus den Höhen-Messungen 5 bestimmten und gespeicherten Terrainhöhen-Messungen 11 und den entsprechenden Referenzhöhen 6, führt. Für die folgende Bestimmung der Positionsstützung 4a und der Güte der Positionsstützung 4b ist es ausreichend bei der Speicherung J einer aktuellen Terrainhöhen-Messung und des relativen zurückgelegten Weges eine vorgegebene Anzahl von Terrainhöhen-Messungen und relativen zurückgelegten Wegen 1 b zu speichern.

Weiterhin ist die Bildung des Suchgebiets beiden Bereichen gemeinsam. Die Bildung H eines Suchgebiets aufgrund vorbestimmter Kriterien und aufgrund jeweils einer vorbestimmten gestützten Positionslösung 1a und Bildung vorbestimmter Positionen 7 innerhalb des Suchgebiets wird benötigt, um die Positionsstützung 4a und die Güte der Positionsstützung 4b zu bestimmen. Das Suchgebiet definiert die Positionen 7, die für die Identifikation der Positionsstützung 4a in betracht gezogen werden. Insbesondere kann ein um eine gestützte Positionslösung 1a zentriertes Suchgebiet verwendet werden, welches aufgrund der Ungenauigkeit jeweils einer gestützten Positionslösung 1a variierende Suchgebietsgrößen erlaubt. Für das Suchgebiet können Positionen 7 verwendet werden, die äquidistant auf einem vordefinierten Raster angeordnet sind.

Für den Vergleich zwischen den vergangenen gespeicherten Terrainhöhen-Messwerten 11 und den entsprechenden Referenzhöhen 6 sowie für die Bestimmung der Güte 17 der entsprechenden Referenzhöhen 6 wird eine Vergleichsposition 8, basierend auf jeweils einer Position 7 im Suchgebiet und dem entsprechenden gespeicherten relativ zurückgelegten Weg 10, benötigt. Aus diesem Grund wird eine Vergleichsposition 8 für jeweils eine Position 7 innerhalb des Suchgebiets und jeweils eines gespeicherten relativ zurückgelegten Weges 10 bestimmt.

Der Ablauf der Bestimmung der Güte der Positions-Stützung Ab beginnt mit der Ermittlung M einer Güte 14 der jeweils aktuellen gestützten Position 1a aus der jeweils aktuellen gestützten Position 1a mittels einer ersten Güte-Funktion. Die Güte-Funktion wird benötigt, um den Einfluss einer fehlerbehafteten Positionshypothese also einer fehlerbehafteten gestützten Position 1a zu beschreiben. Die Ermittlung der Güte-Funktion kann insbesondere mit Hilfe einer ersten Verteilungsfunktion erfolgen die wiederum insbesondere durch eine erste Varianz beschrieben werden kann. Bei der Beschreibung durch eine erste Varianz wird die Verteilungsfunktion auf eine Gaußverteilung beschränkt.

Für jede Position 7 im Suchgebiet und für jede auf dieser Position beruhenden Vergleichsposition 8 wird die Güte jeweils eines gespeicherten relativ zurückgelegten Weges 10 verwendet, um den Einfluss des Fehlers des entsprechenden gespeicherten relativ zurückgelegten Weges 10 zu bestimmen und durch eine Güte auszudrücken. Dies erfolgt über die Ermittlung P einer über die Referenzkarte 6 transformierten Güte jeweils eines gespeicherten relativ zurückgelegten Weges 10 mittels einer zweiten Güte-Funktion unter Verwendung jeweils eines gespeicherten relativ zurückgelegten Weges 10. Der Fehler des entsprechenden gespeicherten relativ zurückgelegten Weges 10 entsteht hauptsächlich durch die Fehler der Beschleunigungs- und Drehratenmesswerte 2 und der Verarbeitung durch das Strap Down Modul C. Für die über die Referenzkarte 6 transformierte Güte des gespeicherten relativ zurückgelegten Weges 10 kann insbesondere eine zweite Verteilungsfunktion verwendet werden. Weiterhin ist es möglich diese Verteilungsfunktion durch eine Gaußverteilung zu approximieren und über eine zweite Varianz zu bestimmen. Für kleine Fehler der gespeicherten relativen zurückgelegten Wege 10 findet die Bestimmung, der über die Referenzkarte 6 transformierten Güte, über die Linearisierung der Referenzkarte, für größere Fehler über eine statistische Auswertung der Referenzhöhen in Abhängigkeit der Fehler der gespeicherten relativen zurückgelegten Wege 10 statt.

Für jede gespeicherte Terrainhöhen-Messung 11 wird eine Güte ermittelt, um den Einfluss der Fehler der Terrainhöhen-Messung auf die Positionsstützung 4a und auf die Güte der Positionsstützung 4b zu bestimmen. Diese wird über die Ermittlung Q einer Güte 16 jeweils einer gespeicherten Terrainhöhen-Messung 11 mittels einer dritten Güte-Funktion unter Verwendung der entsprechenden gespeicherten Terrainhöhen-Messung 11 durchgeführt. Diese Güte-Funktion jeweils einer gespeicherten Terrainhöhen-Messung 11 kann insbesondere durch eine dritte Verteilungsfunktion beschrieben werden. Insbesondere kann durch die Beschränkung der Verteilungsfunktion auf eine Gaußverteilungs-Funktion mit einer dritten Varianz die Güte-Funktion bestimmt werden.

Für alle Vergleichspositionen 8 wird der Einfluss der Fehler der entsprechenden Referenzhöhen 6 auf die Positionsstützung 4a und auf die Güte der Positionsstützung 4b über eine Güte-Funktion bestimmt. Dies erfolgt durch die Ermittlung R einer Güte 17 jeweils einer Referenzhöhe 6 für jeweils eine Vergleichsposition 8 aus vorbestimmten Parametern und der entsprechenden Referenzhöhe 6 mittels einer vierten Güte-Funktion. Diese Güte-Funktion einer Referenzhöhe kann insbesondere durch eine vierte Verteilungsfunktion beschrieben werden. Insbesondere kann durch die Beschränkung der Verteilungsfunktion auf eine Gaußverteilungs-Funktion mit einer vierten Varianz die Güte-Funktion bestimmt werden.

Aus den bestimmten Güte-Funktionen 14, 15, 16 und 17 kann der Einfluss aller Fehler der Eingangsgrößen 1a, 1 b, 5 und 6 auf den Fehler des Fehlermaßes 12 bestimmt und durch eine fünfte Verteilungsfunktion 18 ausgedrückt werden. Diese Bestimmung S einer fünften Verteilungsfunktion 18 des Fehlermaßes für jeweils eine Vergleichsposition 8 erfolgt aus einer Funktion der Güte der jeweils aktuellen gestützten Position 14, der über die Referenzkarte transformierten Güte jeweils eines relativ zurückgelegten Weges 15, der Güte jeweils einer gespeicherten Terrainhöhen-Messung 16 und der Güte jeweils einer Referenzhöhe 17. Dies bedeutet, dass für jede Vergleichsposition 8 eine Verteilungsfunktion 18 des Fehlermaßes bestimmt wird. Für ein Fehlermaß 12 basierend auf der absoluten Differenz und der Repräsentation der einzelnen Güte-Funktionen durch Gaußverteilunges-Funktionen ergibt sich für die Verteilungsfunktion 18 des Fehlermaßes eine Betragsdichte. Die Betragsdichte ist dadurch beschrieben, dass sie für negative Argumente Null ist und für positive Argumente der Summe aus ursprünglicher Gaußverteilung und an der Y-Achse gespiegelter Gaußverteilung entspricht.

Aus der Bestimmung der Verteilungsfunktion 18 des Fehlermaßes ist bekannt, wie der Fehler des Fehlermaßes 12 stochastisch beschrieben ist. Entsprechend der Ermittlung des Gesamtfehlers 13 kann daraus die sechsten Verteilungsfunktion 19 des Gesamtfehlers bestimmt werden. Die Ermittlung T einer sechsten Verteilungsfunktion 19 des Gesamtfehlers für jeweils eine vorbestimmte Position innerhalb des Suchgebiets 7 als Funktion der ermittelten fünften Verteilungsfunktionen 18 der Fehlermaße kann insbesondere durch die Faltung der einzelnen Verteilungsfunktionen der Fehlermaße 15 durchgeführt werden, wenn die Ermittlung des Gesamtfehlers 13 als gewichtete oder ungewichtete Summe aller Fehlermaße 12 stattfindet. Die sechsten Verteilungsfunktion 19 des Gesamtfehlers beschreibt die stochastischen Eigenschaften des Gesamtfehlers 13, der direkt für die Bestimmung der Positionsstützung 4a herangezogen wird. Aus diesem Grund kann aus der sechsten Verteilungsfunktion 19 des Gesamtfehlers auch auf die stochastischen Eigenschaften und somit der Güte der Positionsstützung 4b geschlossen werden.

Für die stochastische Beschreibung der Güte der Positionsstützung 4b wird aus den Verteilungsfunktionen 19 des Gesamtfehlers aller Positionen 7 im Suchgebiet für jede der Positionen 7 im Suchgebiet die Wahrscheinlichkeit bestimmt mit der die entsprechende Position im Suchgebiet den minimalen Gesamtfehler 13 und somit die größte Ähnlichkeit zwischen gespeicherten Terrainhöhen-Messungen 11 und Referenzhöhen 6 aufweist. Die Ermittlung U dieser Minimums-Wahrscheinlichkeiten 20 aller verwendeten Positionen 7 im Suchgebiet mittels einer Funktion der Verteilungsfunktionen 19 aller Gesamttehler als Wahrscheinlichkeit, mit der jeweils eine Position des Suchgebiets den minimalen Gesamtfehler aufweist, stellt eine stochastische Beschreibung der Positionsstützung 4a dar. Die Minimums-Wahrscheinlichkeit 20 wird insbesondere durch Integration über die kumulative Wahrscheinlichkeit, dass alle anderen Fehlermaße größer als ein Parameter X sind, multipliziert mit der Dichtefunktion des eigentlichen Fehlermaßes an der Stelle X bestimmt. Dies ist in Gleichung 1.1 angegeben, wobei $P_{min}$ die Minimums-Wahrscheinlichkeit für die Position 7 mit dem Index $mn$ im Suchgebiet darstellt, $f_{Qmn}$ die Verteilungsfunktion des Gesamtfehlers 19 für die Position 7 mit dem Index $mn$ im Suchgebiet beschreibt und $f_{Qkl}$ alle anderen Verteilungsfunktion des Gesamtfehlers 19 für die Positionen mit dem Index $kl$ im Suchgebiet angeben. Die Größe des Suchgebiets wird durch $M$ und $N$ angegeben.

$$P_{\min} = \int_{-\infty}^{\infty} f_{Q_{mn}}(x) \cdot \left[ \prod_{\substack{k=1 \\ k \neq m}}^{M} \prod_{\substack{l=1 \\ l \neq n}}^{N} \int_{x}^{\infty} f_{Q_{kl}}(y)\,dy \right] \cdot dx \qquad (0.1)$$

Eine hohe Minimums-Wahrscheinlichkeit 20 bedeutet somit eine hohe Wahrscheinlichkeit, dass die entsprechende Position 7 innerhalb des Suchgebiets der tatsächlichen Position entspricht.

Die Bestimmung V der Güte der Positions-Stützung 4b über eine Funktion aller Minimums-Wahrscheinlichkeiten 20 kann insbesondere mittels einer diskreten Verteilungsfunktion erfolgt, die definiert ist durch die Minimums-Wahrscheinlichkeiten 20. Eine solche diskrete Verteilungsfunktion kann in einem Navigationsfilter D direkt verarbeitet werden. Weiterhin ist es möglich die Güte der Positions-Stützung 4b über eine Kovarianzmatrix darzustellen, die aus den Minimums-Wahrscheinlichkeiten 20 und der tatsächlichen Positions-Stützung 4a berechnet wird. Diese Kovarianzmatrix stellt eine Approximation der Güte dar, wie sie direkt in einem speziellen Navigationsfilter D, einem Kalman Filter verarbeitet werden kann.

Die Stützung, der in dem Strap-Down-Modul C ermittelten Navigations-Lösung über den Navigationsfilter D mit Hilfe der bestimmten Positionsstützung 4a und der bestimmten Güte der Positionsstützung 4b, schließt die Rekursion und erlaubt die langzeitstabile Navigation.

## Patentansprüche

1. Verfahren zur Bestimmung einer Navigationslösung eines Navigationssystems mit einem Terrain-Navigationsmodul mit folgenden Schritten:

   - Bestimmung einer Navigationslösung (1), einer gestützten Positionslösung (1a) und des relativen zwischen zwei Höhen-Messungen zurückgelegten Weges (1b) mit Hilfe von Navigationssensoren (A), (B), (Ga), (Gb), einem Strap-Down-Modul (C) und einem Navigationsfilter (D),
   - Ermittlung (M) einer Güte (14) der jeweils aktuellen gestützten Position (1a) aus der jeweils aktuellen gestützten Position (1a) mittels einer ersten Güte-Funktion,
   - Bildung (H) eines Suchgebiets aufgrund vorbestimmter Kriterien und aufgrund jeweils einer vorbestimmten gestützten Positionslösung (1a) und Bildung vorbestimmter Positionen (7) innerhalb des Suchgebiets,
- Speicherung (J) einer aktuellen Terrainhöhen-Messung und des relativen zurückgelegten Weges zwischen der aktuellen Terrainhöhen-Messung und der zuletzt gespeicherten Terrainhöhen-Messung (1b), um diese zur Ermittlung der Güte (15) jeweils eines relativ zurückgelegten Weges und der Güte (16) jeweils einer gespeicherten Terrainhöhen-Messung zu verwenden,
- Bestimmung (K) einer Vergleichsposition (8) für jeweils eine Position (7) innerhalb des Suchgebiets und jeweils eines gespeicherten relativ zurückgelegten Weges (10),
- Ermittlung (P) einer über die Referenzkarte (6) transformierten Güte jeweils eines gespeicherten relativ zurückgelegten Weges (10) mittels einer zweiten Güte-Funktion unter Verwendung jeweils eines gespeicherten relativ zurückgelegten Weges (10),
- Ermittlung (Q) einer Güte (16) jeweils einer gespeicherten Terrainhtihen-Messung (11) mittels einer dritten Güte-Funktion unter Verwendung der entsprechenden gespeicherten Terrainhöhen-Messung (11),
- Ermittlung (R) einer Güte (17) jeweils einer Referenzhöhe (6) für jeweils eine Vergleichsposition (8) aus vorbestimmten Parametern und der entsprechenden Referenzhöhe (6) mittels einer vierten Güte-Funktion,
- Bestimmung (S) von Verteilungsfunktionen (18) der Fehlermaße für jeweils eine Vergleichsposition (8) aus einer Funktion der Güte der jeweils aktuellen gestützten Position (14), der über die Referenzkarte transformierten Güte jeweils eines relativ zurückgelegten Weges (15), der Güte jeweils einer gespeicherten Terrainhöhen-Messung (16) und der Güte jeweils einer Referenzhöhe (17),
- Ermittlung (T) einer Verteilungsfunktion (19) des Gesamtfehlers für jeweils eine vorbestimmte Position innerhalb des Suchgebiets (7) als Funktion der ermittelten Verteilungsfunktionen (18) der Fehlermaße,
- Ermittlung (U) der Minimums-Wahrscheinlichkeiten (20) aller verwendeten Positionen (7) im Suchgebiet mittels einer Funktion der Verteilungsfunktionen (19) aller Gesamtfehler als Wahrscheinlichkeit, mit der jeweils eine Position des Suchgebiets den minimalen Gesamtfehler aufweist,
- Bestimmung (V) der Güte der Positions-Stützung (4b) über eine Funktion aller Minimums-Wahrscheinlichkeiten (20),
- Stützung der in dem Strap-Down-Modul (C) ermittelten Navigations-Lösung über den Navigationsfilter (D) mit Hilfe der bestimmten Positionsstützung (4a) und der bestimmten Güte der Positionsstützung (4b).

2. Verfahren nach dem Patentanspruch 1, **dadurch gekennzeichnet,**
**dass** die Ermittlung (M) der Güte (14) der jeweils aktuellen gestützten Position (1a) aus der jeweils aktuellen gestützten Position (1a) mittels einer ersten Güte-Funktion mit Hilfe einer ersten Verteilungsfunktion erfolgt.

3. Verfahren nach dem Patentanspruch 2, **dadurch gekennzeichnet,**
**dass** die erste Güte-Funktion eine Gaußverteilungs-Funktion mit einer ersten Varianz verwendet.

4. Verfahren nach einem der voranstehenden Patentansprüche, **dadurch gekennzeichnet, dass** bei der Bildung (H) des Suchgebiets eine um eine gestützte Positionslösung (1a) zentriertes Suchgebiet verwendet wird.

5. Verfahren nach einem der voranstehenden Patentansprüche 1 bis 3, **dadurch gekennzeichnet, dass** bei der Bildung (H) des Suchgebiets eine aufgrund der Ungenauigkeit jeweils einer gestützten Positionslösung (1a) variierende Suchgebietsgrößen verwendet werden.

6. Verfahren nach einem der voranstehenden Patentansprüche 1 bis 3, **dadurch gekennzeichnet, dass** bei der Bildung (H) des Suchgebiets Positionen (7) verwendet werden, die äquidistant auf einem vordefinierten Raster angeordnet sind.

7. Verfahren nach einem der voranstehenden Patentansprüche, **dadurch gekennzeichnet, dass** bei der Speicherung (J) die aktuellen Terrainhöhen-Messung aus der aktuellen Höhen-Messung (5) und der aktuellen gestützten Position (1a) ermittelt wird.

8. Verfahren nach einem der voranstehenden Patentansprüche, **dadurch gekennzeichnet, dass** bei der Speicherung (J) einer aktuellen Terrainhöhen-Messung und des relativen zurückgelegten Weges eine vorgegebene Anzahl von Terrainhöhen-Messungen und relativen zurückgelegten Wegen (1b) gespeichert wird.

9. Verfahren nach einem der voranstehenden Patentansprüche, **dadurch gekennzeichnet, dass** bei der Ermittlung (P), der über die Referenzkarte (6) transformierten Güte des gespeicherten relativ zurückgelegten Weges (10), eine zweite Verteilungsfunktion verwendet wird.

**10.** Verfahren nach dem Patentanspruch 9, **dadurch gekennzeichnet, dass** bei der Ermittlung (P) der über die Referenzkarte (6) transformierten Güte eine Gaußverteilungs-Funktion mit einer zweiten Varianz verwendet wird.

**11.** Verfahren nach einem der voranstehenden Patentansprüche, **dadurch gekennzeichnet, dass** bei der Ermittlung (Q) der Güte (16) jeweils einer gespeicherten Terrainhöhen-Messung (11) eine dritte Verteilungsfunktion verwendet wird.

**12.** Verfahren nach dem Patentanspruch 11, **dadurch gekennzeichnet, dass** bei der Ermittlung (Q) der Güte eine Gaußverteilungs-Funktion mit einer dritten Varianz verwendet wird.

**13.** Verfahren nach einem der voranstehen den Patentansprüche, **dadurch gekennzeichnet, dass** bei der Ermittlung (R) der Güte (16) einer Referenzhöhe eine vierte Verteilungsfunktion verwendet wird.

**14.** Verfahren nach dem Patentanspruch 13, **dadurch gekennzeichnet, dass** bei der Ermittlung (R) der Güte eine Gaußverteilungs-Funktion mit einer vierten Varianz verwendet wird.

**15.** Verfahren nach einem der voranstehenden Patentansprüche, **dadurch gekennzeichnet, dass** die Ermittlung (T) der Verteilungsfunktionen (19) des Gesamtfehlers für jeweils eine vorbestimmte Position innerhalb des Suchgebiets (7) über die Faltung der einzelnen Verteilungsfunktionen der Fehlermaße (15) durchgeführt wird.

**16.** Verfahren nach einem der voranstehenden Patentansprüche, **dadurch gekennzeichnet, dass** die Bestimmung (V) der Güte der Positions-Stützung (4b) über eine Funktion aller Minimums-Wahrscheinlichkeiten (20) mittels einer diskreten Verteilungsfunktion erfolgt, die definiert ist durch die Minimums-Wahrscheinlichkeiten (20).

**17.** Verfahren nach einem der voranstehenden Patentansprüche 1 bis 14, **dadurch gekennzeichnet, dass** die Bestimmung (V) der Güte der Positions-Stützung (4b) über eine Kovarianzmatrix erfolgt, die berechnet wird aus den Minimums-Wahrscheinlichkeiten (20) und der tatsächlichen Positions-Stützung (4a).

**18.** Verfahren nach einem der voranstehenden Patentansprüche, **dadurch gekennzeichnet, dass** bei der Stützung der in dem Strap-Down-Modul (C) ermittelten Navigations-Lösung verwendet wird:

- die Bestimmung der Positionsstützung (4a) über die Berechnung (L) des Fehlermaßes (12) für die jeweilige Vergleichsposition (8),
- die Bestimmung (M) des Gesamtfehlers (13) für die jeweilige Position im Suchgebiet (7) und
- die Suche nach dem minimalen Gesamtfehler (N) über alle Gesamtfehler im Suchgebiet zur Identifikation der Positionsstützung (4a).

**19.** Navigations-System mit einem Strap-Down-Modul und einem Navigations-Filter und mit einem Terrain-Navigationsmodul zur Bestimmung einer Navigationslösung, wobei dem Terrain-Navigationsmodul (A) eine gestützten Positionslösung (1a) und relative zwischen zwei Höhen-Messungen zurückgelegte Wege (1b) zugeführt werden, **dadurch gekennzeichnet, dass** das Terrain-Navigationsmodul (A) folgende Funktionen umfasst:

- eine Funktion zur Ermittlung (M) einer Güte (14) der jeweils aktuellen gestützten Position (1a) aus der jeweils aktuellen gestützten Position (1a), mittels einer ersten Güte-Funktion,
- eine Funktion zur Bildung (H) eines Suchgebiets und zur Bildung vorbestimmter Positionen (7) innerhalb des Suchgebiets,
- eine Funktion zur Speicherung (J) einer aktuellen Terrainhöhen-Messung und des relativen zurückgelegten Weges zwischen der aktuellen Terrainhöhen-Messung und der zuletzt gespeicherten Terrainhöhen-Messung (1 b), um diese zur Ermittlung der Güte (15) jeweils eines relativ zurückgelegten Weges und der Güte (16) jeweils einer gespeicherten Terrainhöhen-Messung zu verwenden,
- eine Funktion zur Bestimmung (K) einer Vergleichsposition (8) für jeweils eine Position (7) innerhalb des Suchgebiets und jeweils eines gespeicherten relativ zurückgelegten Weges (10),
- eine Funktion zur Ermittlung (P) einer über die Referenzkarte (6) transformierten Güte jeweils eines gespeicherten relativ zurückgelegten Weges (10) mittels einer zweiten Güte-Funktion unter Verwendung jeweils eines gespeicherten relativ zurückgelegten Weges (10),
- eine Funktion zur Ermittlung (Q) einer Güte (16) jeweils einer gespeicherten Terrainhöhen-Messung (11) mittels einer dritten Güte-Funktion unter Verwendung der entsprechenden gespeicherten Terrainhöhen-Messung (11),

- eine Funktion zur Ermittlung (R) einer Güte (17) jeweils einer Referenzhöhe (6) für jeweils eine Vergleichsposition (8) aus vorbestimmten Parametern und der entsprechenden Referenzhöhe (6) mittels einer vierten Güte-Funktion,

- eine Funktion zur Bestimmung (S) von Verteilungsfunktionen (18) der Fehlermaßes für jeweils eine Vergleichsposition (8) aus einer Funktion der Güte der jeweils aktuellen gestützten Position (14), der über die Referenzkarte transformierten Güte jeweils eines relativ zurückgelegten Weges (15), der Güte jeweils einer gespeicherten Terrainhöhen-Messung (16) und der Güte jeweils einer Referenzhöhe (17),

- eine Funktion zur Ermittlung (T) einer Verteilungsfunktion (19) des Gesamtfehlers für jeweils eine vorbestimmte Position innerhalb des Suchgebiets (7) als Funktion der ermittelten Verteilungsfunktionen (18) der Fehlermaße,

- eine Funktion zur Ermittlung (U) der Minimums-Wahrscheinlichkeiten (20) aller verwendeten Positionen (7) im Suchgebiet mittels einer Funktion der Verteilungsfunktionen (19) aller Gesamtfehler als Wahrscheinlichkeit, mit der jeweils eine Position des Suchgebiets den minimalen Gesamtfehler aufweist,

- eine Funktion zur Bestimmung (V) der Güte der Positions-Stützung (4b) über eine Funktion aller Minimums-Wahrscheinlichkeiten (20),

- eine Funktion zur Stützung der in dem Strap-Down-Modul (C) ermittelten Navigations-Lösung über den Navigationsfilter (D) mit Hilfe der bestimmten Positionsstützung (4a) und der bestimmten Güte der Positionsstützung (4b).

## Claims

1. Method for determining a navigation solution of a navigation system having a terrain-navigation module, having the following steps:

- determining a navigation solution (1), a supported position solution (1a) and the relative path (1b), covered between two height measurements, with the aid of navigation sensors (A), (B), (Ga), (Gb), a strapdown module (C) and a navigation filter (D),

- determining (M) a quality (14) of the respectively current supported position (1a) from the respectively current supported position (1a) by means of a first quality function,

- forming (H) a search area on the basis of predetermined criteria and on the basis in each case of a predetermined supported position solution (1a), and forming predetermined positions (7) within the search area,

- storing (J) a current terrain height measurement and the relative path covered between the current terrain height measurement and the last stored terrain height measurement (1b), in order to use this to determine the quality (15) of in each case one covered path, and the quality (16) of in each case one stored terrain height measurement,

- determining (K) a reference position (8) for in each case one position (7) within the search area, and in each case one stored relatively covered path (10),

- determining (P) a quality, transformed via the reference map (6), of in each case one stored relatively covered path (10) by means of a second quality function with the use of in each case one stored relatively covered path (10),

- determining (Q) a quality (16) of in each case one stored terrain height measurement (11) by means of a third quality function by using the corresponding stored terrain height measurement (11),

- determining (R) a quality (17) of in each case one reference height (6) for in each case one reference position (8) from predetermined parameters and the corresponding reference height (6) by means of a fourth quality function,

- determining (S) distribution functions (18) of the error measures for in each case one reference position (8) from a function of the quality of the respectively current supported position (14), of the quality, transformed by the reference map, of in each case one relatively covered path (15), of the quality of in each case one stored terrain height measurement (16), and of the quality of in each case one reference height (17),

- determining (T) a distribution function of the total error for in each case one predetermined position within the search area (7) as a function of the determined distribution functions (18) of the error measures,

- determining (U) the minimum probabilities (20) of all the positions (7) used in the search area by means of a function of the distribution functions (19) of all the total errors as a probability with which in each case one position of the search area exhibits the minimum total error,

- determining (V) the quality of the position support (4b) via a function of all the minimum probabilities (20), and

- supporting the navigation solution, determined in the strapdown module (C), via the navigation filter (D) with the aid of the determined position support (4a) and the determined quality of the position support (4b).

2. Method according to Patent Claim 1, **characterized in that** the determination (M) of the quality (14) of the respectively current supported position (1a) from the respectively current supported position (1a) is performed by means of a first quality function with the aid of a first distribution function.

3. Method according to Patent Claim 2, **characterized in that** the first quality function is a Gaussian distribution function with a first variance.

4. Method according to one of the preceding Patent Claims, **characterized in that** a search area centred around a supported position solution (1a) is used in forming (H) the search area.

5. Method according to one of the preceding Patent Claims 1 to 3, **characterized in that** a search area having a size which varies because of the inaccuracy of in each case one supported position solution (1a) is used in forming (H) the search area.

6. Method according to one of the preceding Patent Claims 1 to 3, **characterized in that** positions (7) which are arranged equidistantly on a predefined array are used in forming (H) the search area.

7. Method according to one of the preceding Patent Claims, **characterized in that** the current terrain height measurement is determined from the current height measurement (5) and the current supported position (1a) during storing (J).

8. Method according to one of the preceding Patent Claims, **characterized in that** a prescribed number of terrain height measurements and relative paths (1b) covered are stored during storing (J) of a current terrain height measurement and the relative path covered.

9. Method according to one of the preceding Patent Claims, **characterized in that** a second distribution function is used in determining (P) the quality, transformed via the reference map (6), of the stored path (10) relatively covered.

10. Method according to Patent Claim 9, **characterized in that** Gaussian distribution function with a second variance is used in determining (P) the quality transformed via the reference map (6).

11. Method according to one of the preceding Patent Claims, **characterized in that** a third distribution function is used in determining (Q) the quality (16) of in each case one stored terrain height measurement (11).

12. Method according to Patent Claim 11, **characterized in that** a Gaussian distribution function with a third variance is used in determining (Q) the quality.

13. Method according to one of the preceding Patent Claims, **characterized in that** a fourth distribution function is used in determining (R) the quality (16) of a reference height.

14. Method according to Patent Claim 13, **characterized in that** a Gaussian distribution function with a fourth variance is used in determining (R) the quality.

15. Method according to one of the preceding Patent Claims, **characterized in that** the determination (T) of the distribution functions (19) of the total error for a respectively predetermined position within the search area (7) is carried out via the convolution of the individual distribution functions of the error measures (15).

16. Method according to one of the preceding Patent Claims, **characterized in that** the determination (V) of the quality of the position support (4b) is performed via a function of all the minimum probabilities (20) by means of a discrete distribution function which is defined by the minimum probabilities (20).

17. Method according to one of the preceding Patent Claims 1 to 14, **characterized in that** the determination (V) of the quality of the position support (4b) is performed via a covariance matrix which is calculated from the minimum probabilities (20) and the actual position support (4a).

18. Method according to one of the preceding Patent Claims, **characterized in that** use is made of the following steps in supporting the navigation solution determined in the strapdown module (C),

- determining the position support (4a) via the calculation (L) of the error measure (12) for the respective reference position (8),
- determining (M) the total error (13) for the respective position in the search area (7), and
- searching for the minimum total error (N) over all the total errors in the search area in order to identify the position support (4a).

19. Navigation system having a strapdown module and a navigation filter, and having a terrain navigation module for determining a navigation solution, the terrain navigation module (A) being fed a supported position solution (1a) and relative paths (1b) covered between two height measurements, **characterized in that** the terrain navigation module (A) comprises the following functions:

- a function for determining (M) a quality (14) of the respectively current supported position (1a) from the respectively current supported position (1a) by means of a first quality function,
- a function for forming (H) a search area and for forming predetermined positions (7) within the search area,
- a function for storing (J) a current terrain height measurement and the relative path covered between the current terrain height measurement and the last stored terrain height measurement (1b), in order to use this to determine the quality (15) of in each case one covered path, and the quality (16) of in each case one stored terrain height measurement,
- a function for determining (K) a reference position (8) for in each case one position (7) within the search area, and in each case one stored relatively covered path (10),
- a function for determining (P) a quality, transformed via the reference map (6), of in each case one stored relatively covered path (10) by means of a second quality function with the use of in each case one stored relatively covered path (10),
- a function for determining (Q) a quality (16) of in each case one stored terrain height measurement (11) by means of a third quality function by using the corresponding stored terrain height measurement (11),
- a function for determining (R) a quality (17) of in each case one reference height (6) for in each case one reference position (8) from predetermined parameters and the corresponding reference height (6) by means of a fourth quality function,
- a function for determining (S) distribution functions (18) of the error measures for in each case one reference position (8) from a function of the quality of the respectively current supported position (14), of the quality, transformed by the reference map, of in each case one relatively covered path (15), of the quality of in each case one stored terrain height measurement (16), and of the quality of in each case one reference height (17),
- a function for determining (T) a distribution function (19) of the total error for in each case one predetermined position within the search area (7) as a function of the determined distribution functions (18) of the error measures,
- a function for determining (U) the minimum probabilities (20) of all the positions (7) used in the search area by means of a function of the distribution functions (19) of all the total errors as a probability with which in each case one position of the search area exhibits the minimum total error,
- a function for determining (V) the quality of the position support (4b) via a function of all the minimum probabilities (20), and
- a function for supporting the navigation solution, determined in the strapdown module (C), via the navigation filter (D) with the aid of the determined position support (4a) and the determined quality of the position support (4b).

## Revendications

1. Procédé de détermination d'une solution de navigation d'un système de navigation avec un module de navigation de terrain, comprenant les étapes suivantes :

- Détermination d'une solution de navigation (1), d'une solution de position soutenue (1a) et du trajet parcouru relatif (1b) entre deux mesures de la hauteur à l'aide de capteurs de navigation (A), (B), (Ga), (Gb), d'un module strap-down (C) et d'un filtre de navigation (D),
- Détermination (M) d'une qualité (14) de la position soutenue (1a) actuelle respective à partir de la position soutenue (1a) actuelle respective au moyen d'une première fonction de qualité,
- Formation (H) d'un domaine de recherche sur la base de critères prédéfinis et à chaque fois sur la base d'une solution de la position soutenue (1a) prédéfinie et formation de positions prédéfinies (7) à l'intérieur du domaine de recherche,
- Mémorisation (J) d'une mesure de la hauteur du terrain actuelle et du trajet parcouru relatif entre la mesure de la hauteur actuelle du terrain et la dernière mesure de hauteur du terrain (1b) mémorisée afin d'utiliser celle-ci pour déterminer la qualité (15) à chaque fois d'un trajet parcouru relatif et de la qualité (16) à chaque fois d'une mesure de hauteur du terrain mémorisée,

- Détermination (K) d'une position de comparaison (8) à chaque fois pour une position (7) à l'intérieur du domaine de recherche et à chaque fois d'un trajet parcouru relatif (10) mémorisé,
- Détermination (P) d'une qualité transformée par le biais d'une carte de référence (6) à chaque fois d'un trajet parcouru relatif (10) mémorisé au moyen d'une deuxième fonction de qualité en utilisant à chaque fois un trajet parcouru relatif (10) mémorisé,
- Détermination (Q) d'une qualité (16) à chaque fois d'une mesure de hauteur du terrain (11) mémorisée au moyen d'une troisième fonction de qualité en utilisant la mesure de hauteur du terrain (11) mémorisée correspondante,
- Détermination (R) d'une qualité (17) à chaque fois d'une hauteur de référence (6) à chaque fois pour une position de comparaison (8) à partir de paramètres prédéfinis et de la hauteur de référence (6) correspondante au moyen d'une quatrième fonction de qualité,
- Détermination (S) de fonctions de distribution (18) des cotes d'erreur à chaque fois pour une position de comparaison (8) à partir d'une fonction de la qualité de la position soutenue (14) actuelle respective, de la qualité transformée par le biais d'une carte de référence à chaque fois d' un trajet parcouru relatif (15), de la qualité respective d'une mesure de la hauteur du terrain (16) mémorisée et de la qualité respective d'une hauteur de référence (17),
- Détermination (T) d'une fonction de distribution (19) de l'erreur totale à chaque fois pour une position prédéfinie à l'intérieur du domaine de recherche (7) en fonction des fonctions de distribution (18) déterminées des cotes d'erreur,
- Détermination (U) des probabilités minimales (20) de toutes les positions utilisées (7) dans le domaine de recherche au moyen d'une fonction des fonctions de distribution (19) de toutes les erreurs totales en tant que probabilité avec laquelle une position du domaine de recherche présente à chaque fois l'erreur totale minimale,
- Détermination (V) de la qualité du soutien de la position (4b) par le biais d'une fonction de toutes les probabilités minimales (20),
- Soutien de la solution de navigation déterminée dans le module strap-down (C) par le biais du filtre de navigation (D) à l'aide du soutien de position déterminé (4a) et de la qualité déterminée du soutien de position (4b).

2. Procédé selon la revendication 1, **caractérisé en ce que** la détermination (M) de la qualité (14) de la position soutenue (1a) actuelle respective à partir de la position soutenue (1a) actuelle respective s'effectue au moyen d'une première fonction de qualité à l'aide d'une première fonction de distribution.

3. Procédé selon la revendication 2, **caractérisé en ce que** la première fonction de qualité est une fonction de distribution gaussienne avec une première variance.

4. Procédé selon l'une des revendications précédentes, **caractérisé en ce qu'**un domaine de recherche centré autour d'une solution de position soutenue (1a) est utilisé lors de la formation (H) du domaine de recherche.

5. Procédé selon l'une des revendications précédentes 1 à 3, **caractérisé en ce qu'**une taille de domaine de recherche variable en raison de l'imprécision respective d'une solution de position soutenue (1a) est utilisée lors de la formation (H) du domaine de recherche.

6. Procédé selon l'une des revendications précédentes 1 à 3, **caractérisé en ce que** des positions (7) disposées à distances égales sur une grille prédéfinie sont utilisées lors de la formation (H) du domaine de recherche.

7. Procédé selon l'une des revendications précédentes, **caractérisé en ce que** lors de la mémorisation (J), la mesure de la hauteur du terrain actuelle est déterminée à partir de la mesure de hauteur actuelle (5) et de la position soutenue (1a) actuelle.

8. Procédé selon l'une des revendications précédentes, **caractérisé en ce qu'**un nombre prédéfini de mesures de la hauteur du terrain et des trajets parcourus relatifs (1b) est mémorisé lors de la mémorisation (J) d'une mesure de la hauteur du terrain actuelle et du trajet parcouru relatif.

9. Procédé selon l'une des revendications précédentes, **caractérisé en ce qu'**une deuxième fonction de distribution est utilisée lors de la détermination (P) de la qualité du trajet parcouru relatif (10) mémorisé, transformée par le biais de la carte de référence (6).

**10.** Procédé selon la revendication 9, **caractérisé en ce qu'**une fonction de distribution gaussienne avec une deuxième variance est utilisée lors de la détermination (P) de la qualité transformée par le biais de la carte de référence (6).

**11.** Procédé selon l'une des revendications précédentes, **caractérisé en ce qu'**une troisième fonction de distribution est utilisée lors de la détermination (Q) de la qualité (16) à chaque fois d'une mesure de la hauteur du terrain (11) mémorisée.

**12.** Procédé selon la revendication 11, **caractérisé en ce qu'**une fonction de distribution gaussienne avec une troisième variance est utilisée lors de la détermination (Q) de la qualité.

**13.** Procédé selon l'une des revendications précédentes, **caractérisé en ce qu'**une quatrième fonction de distribution est utilisée lors de la détermination (R) de la qualité (16) d'une hauteur de référence.

**14.** Procédé selon la revendication 13, **caractérisé en ce qu'**une fonction de distribution gaussienne avec une quatrième variance est utilisée lors de la détermination (R) de la qualité.

**15.** Procédé selon l'une des revendications précédentes, **caractérisé en ce que** la détermination (T) des fonctions de distribution (19) de l'erreur totale est effectuée à chaque fois pour une position prédéfinie à l'intérieur du domaine de recherche (7) par le biais de la convolution des fonctions de distribution individuelles des cotes d'erreur (15).

**16.** Procédé selon l'une des revendications précédentes, **caractérisé en ce que** la détermination (V) de la qualité du soutien de la position (4b) s'effectue par le biais d'une fonction de toutes les probabilités minimales (20) au moyen d'une fonction de distribution discrète qui est définie par les probabilités minimales (20).

**17.** Procédé selon l'une des revendications précédentes 1 à 14, **caractérisé en ce que** la détermination (V) de la qualité du soutien de la position (4b) s'effectue par le biais d'une matrice de covariance qui est calculée à partir des probabilités minimales (20) et du soutien de la fonction (4a) réel.

**18.** Procédé selon l'une des revendications précédentes, **caractérisé en ce que** sont utilisés lors du soutien de la solution de navigation déterminée dans le module strap-down (C) :

- la détermination du soutien de la position (4a) par le biais du calcul (L) des cotes d'erreur (12) pour la fonction de comparaison (8) respective,
- la détermination (M) de l'erreur totale (13) pour la position respective dans le domaine de recherche (7) et
- la recherche de l'erreur totale minimale (N) sur toutes les erreurs totales dans le domaine de recherche en vue de l'identification du soutien de la position (4a).

**19.** Système de navigation comprenant un module strap-down et un filtre de navigation et comprenant un module de navigation de terrain pour déterminer une solution de navigation, une solution de position soutenue (1a) et les trajets (1b) relatifs parcourus entre deux mesures de la hauteur étant acheminés au module de navigation de terrain (A), **caractérisé en ce que** le module de navigation de terrain (A) comprend les fonctions suivantes :

- une fonction de détermination (M) d'une qualité (14) de la position soutenue (1a) actuelle respective à partir de la position soutenue (1a) actuelle respective au moyen d'une première fonction de qualité,
- une fonction de formation (H) d'un domaine de recherche et pour former des positions prédéfinies (7) à l'intérieur du domaine de recherche,
- une fonction de mémorisation (J) d'une mesure de la hauteur du terrain actuelle et du trajet parcouru relatif entre la mesure de la hauteur actuelle du terrain et la dernière mesure de hauteur du terrain (1b) mémorisée afin d'utiliser celle-ci pour déterminer la qualité (15) à chaque fois d'un trajet parcouru relatif et de la qualité (16) à chaque fois d'une mesure de hauteur du terrain mémorisée,
- une fonction de détermination (K) d'une position de comparaison (8) à chaque fois pour une position (7) à l'intérieur du domaine de recherche et à chaque fois d'un trajet parcouru relatif (10) mémorisé,
- une fonction de détermination (P) d'une qualité transformée par le biais d'une carte de référence (6) à chaque fois d'un trajet parcouru relatif (10) mémorisé au moyen d'une deuxième fonction de qualité en utilisant à chaque fois un trajet parcouru relatif (10) mémorisé,
- une fonction de détermination (Q) d'une qualité (16) à chaque fois d'une mesure de hauteur du terrain (11) mémorisée au moyen d'une troisième fonction de qualité en utilisant la mesure de hauteur du terrain (11) mémorisée correspondante,

- une fonction de détermination (R) d'une qualité (17) à chaque fois d'une hauteur de référence (6) à chaque fois pour une position de comparaison (8) à partir de paramètres prédéfinis et de la hauteur de référence (6) correspondante au moyen d'une quatrième fonction de qualité,
- une fonction de détermination (S) de fonctions de distribution (18) des cotes d'erreur à chaque fois pour une position de comparaison (8) à partir d'une fonction de la qualité de la position soutenue (14) actuelle respective, de la qualité transformée par le biais de la carte de référence à chaque fois d'un trajet parcouru relatif (15), de la qualité respective d'une mesure de la hauteur du terrain (16) mémorisée et de la qualité respective d'une hauteur de référence (17),
- une fonction de détermination (T) d'une fonction de distribution (19) de l'erreur totale à chaque fois pour une position prédéfinie à l'intérieur du domaine de recherche (7) en fonction des fonctions de distribution (18) déterminées des cotes d'erreur,
- une fonction de détermination (U) des probabilités minimales (20) de toutes les positions utilisées (7) dans le domaine de recherche au moyen d'une fonction des fonctions de distribution (19) de toutes les erreurs totales en tant que probabilité avec laquelle une position du domaine de recherche présente à chaque fois l'erreur totale minimale,
- une fonction de détermination (V) de la qualité du soutien de la position (4b) par le biais d'une fonction de toutes les probabilités minimales (20),
- une fonction de soutien de la solution de navigation déterminée dans le module strap-down (C) par le biais du filtre de navigation (D) à l'aide du soutien de position déterminé (4a) et de la qualité déterminée du soutien de position (4b).

Fig. 1

EP 1 736 733 B1

Fig. 2

EP 1 736 733 B1

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Nicht-Patentliteratur

- **D.H. TITTERTON ; J.L. WESTON.** Strapdown inertial navigation technology. Peter Peregrinus Ltd, 1997
- **MOHINDER S. GREWAL ; LAWRENCE R. WEILL ; ANGUS P. ANDREWS.** Global Positioning Systems, Inertial Navigation, and Integration. John Wiley & Sons, Inc, 2001
- **F. GUSTAFSSON ; F. GUNNARSSON ; N. BERGMAN ; U. FORSSELL ; J. JANSSON ; R. KARLSSON ; P. NORDLUND.** Particle Filters for Positioning, Navigation, and Tracking. *IEEE Transactions on Signal Processing,* 2002, vol. 50, 425-435
- **J. P. GOLDON.** Terrain contour matching (TERCOM): a cruise missile guidance aid. *Proceedings of the SPIE Image Processing for Missile Guidance,* 1980, vol. 238
- **J. METZGER ; O. MEISTER ; G. F. TROMMER ; F. TUMBRÄGEL ; B. TADDIKEN.** Covariance Estimation for Terrain Referenced Navigation with a Comparison Technique. *Proceedings of the ION 60th Annual Meeting,* 2004
- **J. METZGER ; G. F. TROMMER.** Improvement of Modular Terrain Navigation Systems by Measurement Decorrelation. *Proceedings of the ION 59th Annual Meeting,* 2003